# EUROPEAN PATENT SPECIFICATION

(11) **EP 0 587 727 B1**
(45) Date of publication and mention of the grant of the patent: **04.10.1995**
(21) Application number: 92912659.7
(22) Date of filing: 12.05.1992
(51) Int. Cl.: C08L 27/06

(54) **FREE-FLOWING POWDERED POLYVINYL CHLORIDE COMPOSITIONS**
ZUSAMMENSETZUNGEN AUS RIESELFAEHIGEM POLYVINYLCHLORIDPULVER
COMPOSITIONS COULANTES DE CHLORURE DE POLYVINYLE REDUITES EN POUDRE

(30) Priority: 23.05.1991 US 707993
(43) Date of publication of application: 23.03.1994
(73) Proprietor: E.I. DU PONT DE NEMOURS AND COMPANY, Wilmington Delaware 19898 (US)
(72) Inventor: STATZ, Robert, Joseph, Kennett Square, PA 19348 (US)
(74) Representative: Abitz, Walter, Dr.-Ing.
(86) International application number: US9203778
(87) International publication number: WO9220742

(56) References cited:
- EP-A- 0 005 736
- EP-A- 0 101 833
- EP-A- 0 377 148
- GB-A- 2 025 431
- US-A- 3 843 616
- US-A- 4 123 585
- WORLD PATENTS INDEX LATEST Derwent Publications Ltd., London, GB; AN 86-80860
- WORLD PATENTS INDEX LATEST Derwent Publications Ltd., London, GB; AN 84-130927

## Description

### BACKGROUND OF THE INVENTION

This invention relates to a novel product and process for preparing a free-flowing plasticized powdered polyvinyl chloride composition which is especially useful for slush molding processes.

Flexible polyvinyl chloride is produced by plasticization with low or high molecular weight plasticizers. The first plasticizers to be used for this purpose were either low molecular weight liquid monomeric organic phthalate or phosphate esters or low molecular weight oligomeric polyesters, which are in effect syrupy liquids. Among the first truly polymeric solid plasticizers to be found compatible with polyvinyl chloride, and effective in plasticizing it, are those disclosed in U.S. Patent No. 3,780,140 to Hammer. These plasticizers consist of copolymers of ethylene, carbon monoxide and a third monomer which can be a vinyl ester or an acrylate or methacrylate. Nonporous polyvinyl chloride containing both conventional low molecular weight plasticizers and high molecular weight plasticizers is disclosed in the above-mentioned patent. Incorporating the high and low molecular weight plasticizers with the nonporous polyvinyl chloride is accomplished by blending the composition on a mill above the the melt temperature of the polyvinyl chloride or by blending a solution of polyvinyl chloride in tetrahydrofuran and the high and low molecular weight plasticizers in tetrahydrofuran, followed by evaporating the tetrahydrofuran. In either case, unfortunately, the resulting plasticized polyvinyl chloride is not in powdered form, (which is the only form that can be used in slush molding processes) but rather pellets or a physical form which cannot be used in slush molding processes. Such plasticized polyvinyl chloride can only be used in expensive melt techniques such as injection molding.

At about the same time, it was also recognized that ethylene vinyl acetate copolymers with high vinyl acetate contents were effective polymeric plasticizers for polyvinyl chloride. Both ethylene vinyl acetate copolymers and the copolymers disclosed in U.S. Patent 3,780,140 are used today to plasticize nonporous polyvinyl chloride.

Porous and nonporous polyvinyl chloride plasticized with only conventional low molecular weight liquid plasticizers form free-flowing powders which can be slush molded. Such plasticized polyvinyl chloride is used extensively commercially for the manufacture of automobile dashboard covers by slush molding processes. However, there is a need for producing free-flowing Plasticised, powdered polyvinyl chloride with both high molecular weight plasticizers combined with low molecular weight plasticizers which can be prepared by simple blending techniques and which, in addition, can be used without any further treatment in inexpensive forming techniques, such as slush molding processes and the resulting plasticized polymers have excellent tear strength.

### SUMMARY OF THE INVENTION

The present invention is directed to a process for preparing a free-flowing plasticized powdered polyvinyl chloride composition, especially useful for slush molding applications, which comprises blending in a mixer 20-65 weight percent, based on the weight of polyvinyl chloride and plasticizers, of a combination of a high molecular weight solid ethylene-containing copolymer plasticizer for polyvinyl chloride having a melt index at 190°C not greater than 3000 g/10 minutes and miscible with polyvinyl chloride and a low molecular weight liquid plasticizer for polyvinyl chloride having a molecular weight not greater than about 3000 in which the solid ethylene-containing copolymer plasticizer dissolves and wherein the weight ratio of high molecular weight plasticizer to low molecular weight plasticizer is from 1:10 to 2.5:1 with 35-80 weight percent, based on the weight of polyvinyl chloride and plasticizers, of porous polyvinyl chloride powder having substantially no impermeable skin and a porosity of from 0.1-0.7 ml/g so that the temperature of the composition during mixing is at least 70°C but not more than 130°C and mixing is continued until the plasticizers are absorbed in the porous polyvinyl chloride and a dry free-flowing powdered plasticized polyvinyl chloride is obtained.

The novel free-flowing plasticized powdered polyvinyl chloride made by the process of this invention are ideally suited for processing, including "slush molding" processes, without any pretreatment.

### DETAILED DESCRIPTION OF THE INVENTION

The present invention is directed to the manufacture of free-flowing plasticized powdered polyvinyl chloride compositions that can be used without further treatment in slush molding processes. The polyvinyl chlorides are plasticized with a high molecular weight solid ethylene-containing copolymer plasticizer that is dissolved in a low molecular weight liquid plasticizer for the polyvinyl chloride.

The free-flowing plasticized powdered polyvinyl chloride is obtained by blending in a high speed mixer the solid high molecular weight plasticizer dissolved in the low molecular weight plasticizer with porous polyvinyl chloride and other additives, if any, such as antioxidants and stabilizers normally used with polyvinyl chloride. High speed mixing conditions result in the temperature of the mixture rising to at least 70°C but not more than 130°C, which occurs in 2-15 minutes, resulting in the low and high molecular weight plasticizers being absorbed into the porous polyvinyl chloride. Alternatively, the polyvinyl chloride and plasticizers in the mixer can be heated externally, if desired, but usually particle friction is adequate to reach the required temperature range. When the plasticizers are absorbed in the polymers a free-flowing plasticized polyvinyl chloride powder is obtained. The polyvinyl chloride powder can be cooled while gently agitating the plasticized polymer. The free-flowing plasticized polyvinyl chloride polymer in powder form is especially useful in so-called "slush molding" processes.

The polyvinyl chloride used in the process of this invention has Substantially no discernible skin and has a porosity of from 0.1-0.7 ml/g, preferably 0.35-0.7 ml/g, measured according to ASTM D2873-70. such porous polyvinyl chlorides used in the process of this invention may be prepared by first polymerizing the vinyl chloride monomer with a monomer soluble polymerization initiator, such as lauryl peroxide, in the presence of a monomer soluble dispersing agent, to 5-12% conversion, either in mass or together with a smaller amount of water than monomer such that the monomer is the continuous phase (generally up to one third of the mixture is water), then adding sufficient water to cause a phase inversion, so that water is the continuous phase (usually water is half or more than half the weight of the mixture) with the partially polymerized monomer dispersed in it, then completing the polymerization. When water is present in the first part of the conversion, about 0.1 weight percent of a water soluble suspending agent, such as a hydroxyalkyl cellulose ether, is added to the water. About the same amount is present when water is added to form the continuous phase. The monomer soluble surface active agent present throughout the polymerization is such that it contains too few hydrophilic groups to make it water soluble. Representative surface active agents include sorbitan monostearate and zinc dilauryl sulfate. Preparation of such porous polyvinyl chloride is well known and is further described in U.S. Patent No. 3,706,722.

Other methods can be used to prepare substantially skinless porous polyvinyl chlorides that are used in the present invention. Porous substantially skinless polyvinyl chlorides can also be made by suspension polymerization without phase inversion, water always being the continuous phase. The process for preparing these polyvinyl chlorides employes an ionic sensitive primary dispersant capable of thickening water and at least one secondary dispersant, where the ionic sensitive dispersant is charged to the polymerization at 1-5% conversion. This method is further described in detail in U.S. Patent No. 4,711,908.

It is critical to use in the process of this invention, a substantially skinless, porous polyvinyl chloride in order to make a plasticized free-flowing powder that contains a high molecular weight plasticizer. The skinless porous polyvinyl chloride subjected to high intensity mixing readily absorbs the high molecular weight plasticizer that is dissolved in the low molecular weight plasticizer.
Such skinless, porous polyvinyl chloride are commercially available and sold under the trade name VYGEN® polyvinyl chloride resin available from General Tire and Rubber Company and GEON® polyvinyl chloride resin available from B. F. Goodrich Company.

The high molecular weight solid ethylene-containing copolymer plasticizers for the substantially skinless, porous polyvinyl chlorides that are used in the process of this invention have a melt index at 190°C not greater than about 3000 g/10 minutes according to ASTM D1238-65T condition E usually 1-3000 g/10 minutes, preferably 5-300 g/10 minutes. The solid plasticizers used are miscible with the polyvinyl chloride and they are soluble in the low molecular weight plasticizer. The solid high molecular weight plasticizers are dissolved in the low molecular weight plasticizer and blended with a high speed mixer so that the plasticizers are absorbed in the porous polyvinyl chloride. The solid ethylene-containing copolymer plasticizers used in the process of this invention include ethylene-containing vinyl acetate copolymers, having at least 55 weight percent to 75 weight percent vinyl acetate, thus making the plasticizer miscible with the polyvinyl chloride. The ethylene vinyl acetate copolymers plasticizer can also contain either carbon monoxide or sulfur dioxide, usually in amounts of from 2-30 weight percent preferably 5-15 weight percent. Ethylene-containing copolymer plasticizers also include ethylene/alkyl methacrylate/carbon monoxide or sulfur dioxide copolymers, wherein the alkyl group is from 1-8 carbon atoms, preferably 4 or 8 carbon atoms, containing 20-50 weight percent alkyl methacrylate, and 2-30 weight percent, preferably 5-15 weight percent, of dither carbon monoxide or sulfur dioxide, the balance ethylene. Preferably, the ethylene-containing copolymer plasticizer is an ethylene/alkyl acrylate containing either carbon monoxide or sulfur dioxide and wherein the alkyl group contains 1-8 carbon atoms, preferably 4 carbon atoms. Generally, the alkyl acrylate is present in amount of from 10-50, usually 20-40 weight percent and the carbon monoxide or sulfur dioxide are present in amounts of from 2-30 weight percent, usually 5-15 weight percent. Representative solid high molecular weight plasticizers include ethylene/vinyl acetate, ethylene/vinyl acetate/carbon monoxide or sulfur dioxide, ethylene/n-butyl acrylate/carbon monoxide, ethylene/methyl methacrylate/carbon monoxide, or sufur dioxide, ethylene/ethyl acrylate/carbon monoxide or sulfur dioxide, ethylene/methyl acrylate/carbon monoxide or sulfur dioxide, ethylene/hexyl acrylate/sulfur dioxide. Plasticizers of the type described above are well known products and are further described in U.S. Patent 3,780,140 and 3,684,778.

The low molecular weight liquid plasticizers in which the high molecular weight plasticizers are dissolved are well known plasticizer for polyvinyl chloride. The low molecular weight plasticizers that can be monomeric or polymeric have a molecular weight not greater than 3500, usually from 1000-3000. The amount of low molecular weight plasticizer added to the polyvinyl chloride is generally from, by weight, 5-50 percent, preferably 10-30 percent based on the plasticizer polymer. Representative low molecular weight liquid plasticizers that can be used in the present process that are conventionally used to plasticize polyvinyl chloride include phthalates, adipates, azealates, trimellitates, phosphate esters and polyesters. The phthalate esters are most commonly used. The adipates and azelates impart improved low temperature properties to the polymers. The phosphates render the polymers flame retardant. Higher alkyl phthalates, e.g., diundecyl phthalate, improves fogging resistance of the polymer when used, for example, as dashboard covers in automobiles. Representative specific low molecular weight liquid plasticizers that can be used in the process of this invention include dioctyl phthalate, diundecyl phthalate, dibutyl adipate, dibenzylazelate, trioctyltrimellitate, diphenyl octylphosphate and low molecular weight polyesters and polypropylene glycol. These low molecular weight plasticizers for polyvinyl chloride are well known in the art and they are described in Modern Plastics Encyclopedia, Vol. 57, page 222, 1980-1981.

The weight ratio of high molecular weight solid plasticizer to low molecular weight liquid plasticizer is from 1:10 to 2.5:1, preferably from 1:5 to 1:2.5. If the ratio is less than 1:10 then tear strength of products made from the polymer is not improved significantly and if the ratio is greater than 2.5:1 then uniform and rapid incorporation of plasticizers is not achieved and slush molding is not feasible.

Optionally, small amounts of nonporous dispersion grade polyvinyl chloride can be added to the porous polyvinyl chloride and plasticizers in the mixer. The addition of nonporous polyvinyl chloride in small amounts, up to about 10 weight percent, usually less than about 4 weight percent, based on the total amount of polyvinyl chloride, improves the flow characteristics of the plasticized powdered polyvinyl chloride.

Since polyvinyl chloride is thermally sensitive, stabilizers are invariably added to the polymer. A large variety of stabilizers are used that are customized for polyvinyl chloride that include inorganic and organometallic compounds, such as lead, barium-cadmium, cadmium-zinc, also nitrogenous and epoxy compounds are well know stabilizers. Such stabilizers used by those working in this technology include a barium-zinc soap stabilizer, epoxidized soybean oil and inorganic salts. Usually, these stabilizers are present in amounts from 5 to 10 weight percent based on the polyvinyl chloride. Antioxidants are added to ethylene copolymers because of their sensitivity to air oxidation. Antioxidants used are selected phenolic types and secondary antioxidants such as thioethers and phosphites. Representative antioxidants include dilauryl thiodipropionate, ditridecyl thiodipropionate, tris(nonylphenyl)phosphite, butylated hydroxy toluene, and tetrakis methylene (3,5-di-tert-butyl-4-hydroxyhydrocinnamate) methane. Usually these antioxidants are present in amounts of 300 to 1600 ppm for the phenolics, and in amounts of 300 to 10,000 ppm for the thioethers and phosphites based on the ethylene copolymers.

Slush molding is an inexpensive process which enables powdered materials to be molded in an open hollow mold, without pressure or shear. Open hollow shapes are produced by this technique with lightweight inexpensive molds. Simulated slush molding was carried out on the plasticized composition prepared in the following examples by spreading the free-flowing plasticized powdered polyvinyl chloride inside a chase on a metal plate, covering the polyvinyl chloride powder filled cavity with another plate and placing the assembly into a compression molding apparatus at about 225°C. The platens of the press were closed to touch, but did not exert any pressure on the mold/powder assembly. The sample was heated for about three to five minutes depending on the thickness (about 40 mil) of the sample. The mold assembly was then removed and placed in a similar press for cooling. After the mold assembly was cooled, the resulting sample plaques were removed and annealed at 60°C in an air circulating oven overnight and then placed at constant temperature and humidity overnight before testing for tear strength. Die tear was measured on the plaques according to ASTM D624. Melt Index was measured using ASTM D1238-65T, condition E.

### EXAMPLES

The following examples are illustrative of the invention wherein parts are by weight unless otherwise indicated.

### Example 1

Six hundred forty grams (30 wt. %) of the low molecular weight liquid plasticizer diundecyl phthalate (DUP) having a molecular weight of 474, 0.21 grams of Irganox 1010, a hindered phenolic antioxidant, i.e., tetrakis methylene (3,5-di-tert-butyl-4-hydroxyhydrocinnamate)methane, and 1.07 grams of the antioxidant dilauryl thiodipropionate (DLTDP), was heated to 120°C with mechanical stirring. Two hundred fourteen grams (10 weight percent) of the high molecular weight solid plasticizer (57.3%) ethylene/32.8% n-butyl acrylate/9.9% carbon monoxide copolymer (ENBACO) having a melt index at 190°C of 11.6 g/10 minutes was added to the heated DUP solution and stirred in a mixer until completely dissolved.

Twelve hundred twenty grams (57.2 weight percent) of porous polyvinyl chloride (PVC) resin having substantially no impervious skin and a porosity greater than 0.35 ml/g, 46.4 grams of a barium zinc soap stabilizer (Mark 6708), 28 grams of an inorganic salt containing sodium and calcium cations and perchlorate anions. 61 grams of epoxidized soybean oil stabilizer were added to a high speed Welex mixer operated at 2500 rpm. Mixing was continued until the temperature of the PVC composition reached 80°C.

The ENBACO copolymer plasticizer dissolved in DUP was then added slowly to the Welex high speed mixer, operated at 2500 rpm, containing the porous PVC. The temperature during mixing without external heating was allowed to rise to about 110°C due to particle friction. The Welex mixer was run until the addition of the ENBACO copolymer dissolved in the DUP plasticizer was complete. Sixty-one grams (2.8 weight percent) of a fine powdered dispersion grade nonporous PVC (Geon® 141) was then added to the blend in the mixer to further improve the flow characteristic of the plasticized PVC powder. The speed of the mixer was then lowered to 1000 rpm and with cool water circulated in a jacket on the mixer the PVC composition was cooled to 60°C. The resulting plasticized PVC composition containing the high and low molecular weight plasticizers absorbed therein was in the form of a dry free-flowing powder. The dry powder was screened using a 20 mesh screen and was successfully slush molded as described hereinabove.
Tear strength on a plaque of the slush molded plasticized PVC was determined using die C tear ASTM D624 and the value was 307 lbs./inch (55 Kg/cm).

### Example 2

The procedure described above in Example 1 was substantially repeated except 222 grams (10.39 weight percent) of the solid plasticizer (64%) ethylene/(27%) vinyl acetate/(9%) carbon monoxide copolymer (EVACO) having a melt index at 190°C of 30 was added in place of the ENBACO to the 666 grams (30.7 weight percent) of the liquid plasticizer DUP. The resulting solution was added to 1220 grams (56.2 weight percent) of the porous substantially skinless PVC. The resulting dry, free-flowing plasticized powdered PVC was successfully slush molded as described hereinabove. Tear strength measured on a plaque of the molded PVC was 298 lbs./inch (53,2 Kg/cm).

### Example 3

The procedure described above in Example 1 was substantially repeated except 337 grams (15.8 weight percent) of the solid plasticizer (51.3%) ethylene/(38.9%) n-butyl acrylate/(9.8%) carbon monoxide copolymer (ENBACO) having a melt index at 190° of 85.6 was added to 517 grams (24.2 weight percent) of the liquid plasticizer DUP containing 0.34 grams Irganox 1010. (The DLTDP was omitted from this formulation.) The solution of plasticizers was added to 1220 grams (57.2 weight percent) of the porous substantially skinless PVC. The resulting plasticized dry free-flowing powdered PVC was successfully slush molded as described hereinabove. Tear strength on a plaque of the molded plasticized PVC was 316 lbs./inch (56,4 Kg/cm).

### Example 4

The procedure described above in Example 1 was substantially repeated except that 214 grams (10 weight percent) of the solid plasticizer (31%) ethylene/(69%) vinyl acetate copolymer (EVA) having a melt index at 190°C of 21.3 was added in place of the ENBACO to 640 grams (30 weight percent) of the liquid plasticizer DUP. The resulting solution was then added to the porous substantially skinless PVC. The resulting plasticized dry free-flowing powdered PVC was successfully slush molded as described hereinabove. Tear strength on a plaque of the molded PVC was 328 lbs./inch (58,5 Kg/cm).

### Example 5

The procedure described above in Example 1 was substantially repeated except that 222 grams (10.5 weight percent) of the solid plasticizer (57.3%) ethylene/(32.8%) n-butyl acrylate/(9.9%) carbon monoxide copolymer (ENBACO) having a melt index at 190°C of 11.6 was added to 666 grams (31.6 weight percent) of the liquid plasticizer DUP. The resulting solution was added to 1220 grams (57.9%) of the porous substantially skinless PVC containing 31.7 grams of a barium zinc soap stabilizer mixture, 19 grams of a perchlorate salt stabilizer and 63.4 grams of epoxidized soybean oil stabilizer in the high speed Welex mixer. (Dispersion grade nonporous PVC was omitted from this formulation.) The resulting plasticized dry powdered PVC was successfully slush molded as described hereinabove.

## Claims

1. A process for the preparation of a free-flowing plasticized powdered polyvinyl chloride composition, especially useful for slush molding applications, which comprises blending in a mixer about 20-65 weight percent, based on the weight of polyvinyl chloride and plasticizers, of a combination of a high molecular weight solid ethylene-containing copolymer plasticizer for polyvinyl chloride having a melt index at 190°C not greater than about 3000 g/10 minutes and miscible with polyvinyl chloride and a low molecular weight liquid plasticizer for polyvinyl chloride having a molecular weight not greater than about 3000 in which the solid ethylene-containing copolymer plasticizer dissolves and wherein the weight ratio of high molecular weight plasticizer to low molecular weight plasticizer is from 1:10 to 2.5:1, with about 35-80 weight percent, based on the weight of polyvinyl chloride and plasticizers, of porous polyvinyl chloride powder having substantially no impermeable skin and a porosity of from 0.1-0.7 ml/g so that the temperature of the composition during mixing is at least about 70°C but not more than about 130°C and mixing is continued until the plasticizers are absorbed in the porous polyvinyl chloride and a dry free-flowing powdered plasticized polyvinyl chloride is obtained.

2. A process of Claim 1 wherein the ethylene-containing copolymer plasticizer is an ethylene/alkyl acrylate/carbon monoxide copolymer.

3. A process of Claim 2 wherein the alkyl group of the alkyl acrylate contains 1-8 carbon atoms.

4. A process of Claim 2 wherein the alkyl acrylate is n-butyl acrylate.

5. A process of Claim 1 wherein the ethylene-containing copolymer plasticizer is an ethylene/alkyl acrylate/sulfur dioxide copolymer.

6. A process of Claim 1 wherein the ethylene-containing copolymer plasticizer is an ethylene/alkyl methyacrylate or alkyl acrylate/carbon monoxide or sulfur dioxide copolymer.

7. A process of Claim 1 wherein the ethylene-containing copolymer plasticizer is an ethylene/alkyl methacrylate or alkyl acrylate/sulfur dioxide copolymer.

8. A process of Claim 1 wherein the ethylene-containing copolymer plasticizer is an ethylene/vinyl acetate copolymer.

9. A process of Claim 1 wherein the ethylene-containing copolymer plasticizer is an ethylene/vinyl acetate/carbon monoxide copolymer.

10. A process of Claim 1 wherein the ethylene-containing copolymer is an ethylene/vinyl acetate/sulfur dioxide copolymer.

11. A plasticized polyvinyl chloride made by the process of Claim 1.

12. A plasticized polyvinyl chloride made by the process of Claim 2.

## Patentansprüche

1. Verfahren zur Herstellung einer frei fließenden plastifizierten gepulverten Polyvinylchlorid-Zusammensetzung, die insbesondere geeignet ist für Slush-Molding-Anwendungen, das das Mischen in einem Mixer von, bezogen auf das Gewicht von Polyvinylchlorid und Weichmachern, etwa 20-65 Gew.-% einer Kombination aus einem hochmolekularen festen ethylenhaltigen Copolymer-Weichmacher für Polyvinylchlorid, der einen Schmelzindex bei 190 °C von nicht größer als etwa 3000 g/10 min aufweist und mischbar ist mit Polyvinylchlorid, und einem niedermolekularen flüssigen Weichmacher für Polyvinylchlorid, der ein Molekulargewicht von nicht größer als etwa 3000 aufweist, in dem sich der feste ethylenhaltige Copolymer-Weichmacher auflöst, umfaßt und bei dem das Gewichtsverhältnis von hochmolekularem Weichmacher zu niedermolekularem Weichmacher 1:10 bis 2,5:1 beträgt, wobei etwa 35-80 Gew.-%, bezogen auf das Gewicht von Polyvinylchlorid und Weichmachern, des porösen Polyvinylchlorid-Pulvers im wesentlichen keine undurchlässige Haut und eine Porosität von 0,1 bis 0,7 ml/g besitzen, so daß die Temperatur der Zusammensetzung während des Mischens wenigstens etwa 70 °C, jedoch nicht mehr als etwa 130 °C beträgt, und bei dem das Mischen fortgesetzt wird, bis die Weichmacher in dem porösen Polyvinylchlorid absorbiert sind und ein trockenes frei fließendes gepulvertes plastifiziertes Polyvinylchlorid erhalten wird.

2. Verfahren nach Anspruch 1, bei dem der ethylenhaltige Copolymer-Weichmacher ein Ethylen/Alkylacrylat/Kohlenmonoxid-Copolymer ist.

3. Verfahren nach Anspruch 2, bei dem die Alkylgruppe des Alkylacrylats 1 bis 8 Kohlenstoffatome enthält.

4. Verfahren nach Anspruch 2, bei dem das Alkylacrylat n-Butylacrylat ist.

5. Verfahren nach Anspruch 1, bei dem der ethylenhaltige Copolymer-Weichmacher ein Ethylen/Alkylacrylat/Schwefeldioxid-Copolymer ist.

6. Verfahren nach Anspruch 1, bei dem der ethylenhaltige Copolymer-Weichmacher ein Ethylen/Alkylmethacrylat- oder Alkylacrylat/Kohlenmonoxid- oder Schwefeldioxid-Copolymer ist.

7. Verfahren nach Anspruch 1, bei dem der ethylenhaltige Copolymer-Weichmacher ein Ethylen/Alkylmethacrylat- oder Alkylacrylat/Schwefeldioxid-Copolymer ist.

8. Verfahren nach Anspruch 1, bei dem der ethylenhaltige Copolymer-Weichmacher ein Ethylen/Vinylacetat-Copolymer ist.

9. Verfahren nach Anspruch 1, bei dem der ethylenhaltige Copolymer-Weichmacher ein Ethylen/Vinylacetat/Kohlenmonoxid-Copolymer ist.

10. Verfahren nach Anspruch 1, bei dem das ethylenhaltige Copolymer ein Ethylen/Vinylacetat/Schwefeldioxid-Copolymer ist.

11. Plastifiziertes Polyvinylchlorid, hergestellt durch das Verfahren nach Anspruch 1.

12. Plastifiziertes Polyvinylchlorid, hergestellt durch das Verfahren nach Anspruch 2.

## Revendications

1. Procédé pour la préparation d'une composition de chlorure de polyvinyle plastifiée en poudre s'écoulant librement, spécialement utile pour les applications de moulage de pâtes, qui comprend le mélange dans un mélangeur d'environ 20 à 65 % en poids, sur la base du poids du chlorure de polyvinyle et des plastifiants, d'une combinaison d'un plastifiant solide de haut poids moléculaire, en copolymère contenant de l'éthylène, pour le chlorure de polyvinyle, ayant un indice de fusion à 190 °C non supérieur à environ 3000 g/10 min. et miscible avec le chlorure de polyvinyle, et d'un plastifiant liquide de bas poids moléculaire pour le chlorure de polyvinyle, ayant un poids moléculaire non supérieur à environ 3000, dans lequel le plastifiant solide formé d'un copolymère contenant de l'éthylène se dissout et dans lequel le rapport pondéral du plastifiant de haut poids moléculaire au plastifiant de bas poids moléculaire est de 1:10 à 2,5:1, avec environ 35 à 80 % en poids, sur la base du poids du chlorure de polyvinyle et des plastifiants, de poudre de chlorure de polyvinyle poreuse n'ayant substantiellement pas de croûte imperméable et ayant une porosité de 0,1 à 0,7 ml/g, de façon que la température de la composition durant le mélange soit d'au moins environ 70 °C mais non supérieure à environ 130 °C, et la poursuite du mélange jusqu'à ce que les plastifiants soient absorbés dans le chlorure de polyvinyle poreux et qu'on obtienne un chlorure de polyvinyle plastifié en poudre sèche s'écoulant librement.

2. Procédé selon la revendication 1, dans lequel le plastifiant en copolymère contenant de l'éthylène est un copolymère éthylène/acrylate d'alkyle/monoxyde de carbone.

3. Procédé selon la revendication 2, dans lequel le groupe alkyle de l'acrylate d'alkyle contient 1 à 8 atomes de carbone.

4. Procédé selon la revendication 2, dans lequel l'acrylate d'alkyle est l'acrylate de n-butyle.

5. Procédé selon la revendication 1, dans lequel le plastifiant en copolymère contenant de l'éthylène est un copolymère éthylène/acrylate d'alkyle/dioxyde de soufre.

6. Procédé selon la revendication 1, dans lequel le plastifiant en copolymère contenant de l'éthylène est un copolymère éthylène/méthacrylate d'alkyle ou acrylate d'alkyle/monoxyde de carbone ou dioxyde de soufre.

7. Procédé selon la revendication 1, dans lequel le plastifiant en copolymère contenant de l'éthylène est un copolymère éthylène/méthacrylate d'alkyle ou acrylate d'alkyle/dioxyde de soufre.

8. Procédé selon la revendication 1, dans lequel le plastifiant en copolymère contenant de l'éthylène est un copolymère éthylène/acétate de vinyle.

9. Procédé selon la revendication 1, dans lequel le plastifiant en copolymère contenant de l'éthylène est un copolymère éthylène/acétate de vinyle/monoxyde de carbone.

10. Procédé selon la revendication 1, dans lequel le copolymère contenant de l'éthylène est un copolymère éthylène/acétate de vinyle/dioxyde de soufre.

11. Chlorure de polyvinyle plastifié préparé par le procédé de la revendication 1.

12. Chlorure de polyvinyle plastifié préparé par le procédé de la revendication 2.
